# EUROPÄISCHE PATENTANMELDUNG

(11) **EP 1 921 326 A1**
(43) Veröffentlichungstag der Anmeldung: **14.05.2008**
(21) Anmeldenummer: 07113221.1
(22) Anmeldetag: 26.07.2007
(51) Int. Cl.: F15B 1/26, F04C 2/08, F16N 13/22

(54) **Versorgungseinheit für Druckfluid**

(30) Priorität: 25.08.2006 EP 06119573
(71) Anmelder: Wärtsilä Schweiz AG, 8401 Winterthur (CH)
(72) Erfinder: Schmid, Daniel, 8409, Winterthur (CH); Ruiter, Jan, 68723, Schwetzingen (DE); Sattelberger, Paul, 68799, Reilingen (DE); Wijeyratne, Norman, 8302, Kloten (CH)
(74) Vertreter: Sulzer Management AG

(57) **Zusammenfassung**

Eine Versorgungseinheit umfasst eine Versorgungspumpe (13) sowie einen Verteilerblock (15) für ein Druckfluid, eine Zufuhrleitung (16) zur Zuführung von Druckfluid zur Versorgungspumpe (13) sowie eine Druckfluidleitung (11) zur Zuführung von Druckfluid zu einem Verbraucher (9). Die Versorgungspumpe (13) dient zur Förderung des Druckfluids zum Verteilerblock (15), wobei der Verteilerblock zumindest einen Verteilerkanal (17,20,21,22) enthält, durch welchen Druckfluid von der Versorgungspumpe über die Druckfluidleitung (11) zum Verbraucher (9) pumpbar ist. Die Versorgungspumpe (13) ist unmittelbar an den Verteilerblock (15) ankoppelbar.

## Beschreibung

Die Erfindung betrifft eine Versorgungseinheit zur Förderung von Druckfluid für die Steuerung zumindest einer Dosierpumpe zur Dosierung von Schmiermittel, wie beispielsweise von Schmieröl, für die Schmierung einer einen hin- und herbeweglichen Kolben aufnehmenden Zylinderinnenwand oder die Schmierung eines Kolbens einer Hubkolbenbrennkraftmaschine insbesondere eines Grossdieselmotors.

Grossdieselmotoren werden häufig als Antriebsaggregate für Schiffe, aber auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, wodurch hohe Anforderungen an die Betriebssicherheit und die Verfügbarkeit gestellt werden.

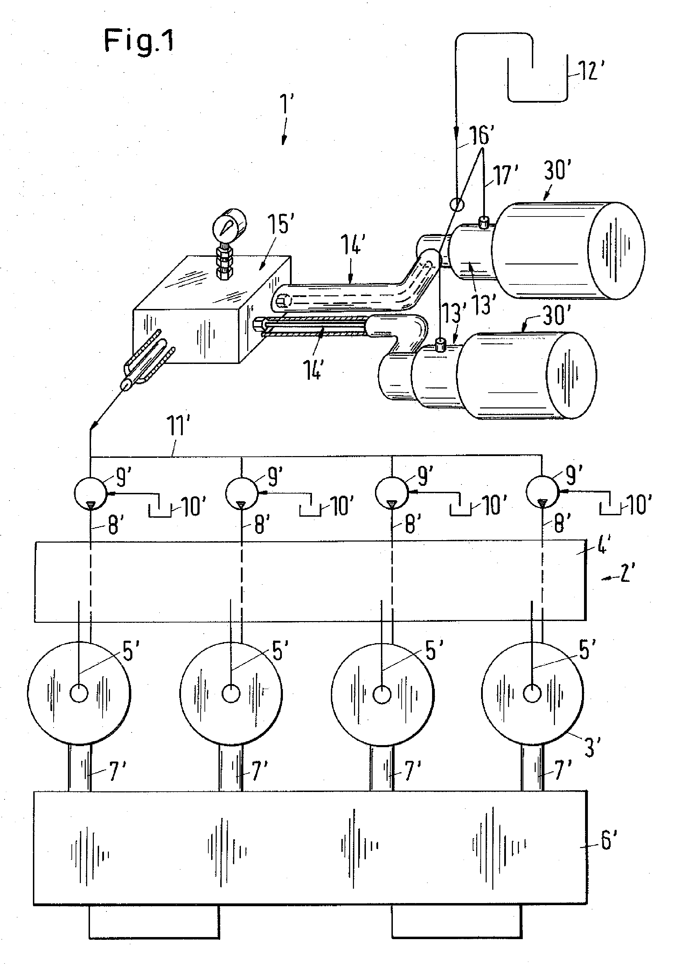

Zur Verdeutlichung ist in Fig. 1 eine an sich bekannte Versorgungseinheit zur Förderung von Hydrauliköl für die Steuerung zumindest einer Dosierpumpe zur Dosierung von Schmieröl für einen Zylinder einer Hubkolbenbrennkraftmaschine schematisch dargestellt. Zur Unterscheidung des Standes der Technik von der nachfolgend zu beschreibenden Erfindung wurden dabei die Bezugszeichen der Fig. 1 mit einem Hochkomma versehen.

In Fig. 1 ist eine Versorgungseinheit 1' für zumindest eine Schmiermittelpumpe 9', insbesondere eine Hubtaktschmierpumpe zur Zylinderschmierung eines Zylinders 3' eines bekannten Grossdieselmotors 2' schematisch dargestellt, der z.B. bis zu 12, 13 oder 14 Zylinder, oder sogar mehr haben kann, und dessen Gehäuse in an sich bekannter Weise einen nicht dargestellten Ständer und ein Kurbelgehäuse umfasst, in welchem Kurbelgehäuse die Kurbelwelle gelagert ist. Vier derartige Zylinder 3' sind in einer stark vereinfachten schematischen Ansicht von oben dargestellt. Eine Brennstoffversorgungseinheit 4' ist über Brennstoffversorgungsleitungen 5' mit jedem der Zylinder verbunden. Brennstoffeinspritzventile wurden weggelassen, um die Darstellung nicht mit Details zu überladen, die für die Erklärung der Wirkungsweise der Erfindung nicht von Bedeutung sind. In Fig. 1 ist gegenüberliegend zur Brennstoffversorgungseinheit 4' eine Abgassammeleinheit 6' angeordnet, in welche eine Abgasleitung 7' pro Zylinder mündet. Zu jedem der Zylinder 3' führt weiters zumindest eine Schmiermittel enthaltende Leitung 8'. Dieses Schmiermittel wird für die Schmierung der Zylinderinnenwand verwendet, um zu gewährleisten, dass der Kolben an der Zylinderinnenwand hin- und hergleiten kann, ohne dass es zur Schädigung der Zylinderinnenwand und/oder des Kolbens durch Mangelschmierung kommt. Das Schmiermittel wird über zumindest je eine, einem Zylinder zugeordnete Schmiermittelpumpe 9' bereitgestellt. Diese Schmiermittelpumpe fördert je nach Bedarf Schmiermittel von einem Schmiermittelreservoir 10' über die Schmiermittelleitung 8' in den Zylinderinnenraum. Die Schmiermittelpumpe 9' ist insbesondere als Kolbenpumpe ausgestaltet, deren Kolben von einem Druckfluid antreibbar ist. Druckfluid wird der Schmiermittelpumpe in dem dargestellten Beispiel über eine Druckfluidleitung 11' beim Dosierhub und beim Rückstellhub zugeführt, wobei in Fig. 1 nur je eine Druckfluidleitung dargestellt ist. Das Druckfluid wird nach Gebrauch über eine nicht dargestellte Leitung in das Druckfluidreservoir 12' zurückgeführt, von wo es nach einem eventuell erforderlichen Reinigungsschritt zur Entfernung von Abrieb und dergleichen wieder in den Druckfluidkreislauf gelangen kann. Das Druckfluid muss zum Betrieb der Schmiermittelpumpe 9' nach diesem bekannten Ausführungsbeispiel auf einen Druck von ungefähr 50 bar gebracht werden, wozu eine Komprimierung des hier unter einem Druck von ca. 4 bis 8 bar vorliegenden Druckfluids erforderlich ist. Zur Komprimierung wird eine Versorgungspumpe 13', vorzugsweise eine Schraubenpumpe oder eine Zahnradpumpe verwendet, wobei in Fig. 1 zwei gleichartige Pumpen gezeigt sind, wobei die zweite Pumpe aus Redundanzgründen vorgesehen ist. Die Versorgungspumpe saugt Druckfluid, insbesondere ein Hydrauliköl aus dem Druckfluidreservoir 12' an, wobei das Druckfluid über ein Dreiwegehahn, der insbesondere als Kugelhahn ausgestaltet ist, zu zumindest einer der beiden Pumpen zuführbar ist. Nach der Komprimierung des Druckfluids in der Versorgungspumpe 13' gelangt das Druckfluid über Druckleitungen 14' in einen Verteilerblock 15', in welchem Druckfluid für die verschiedensten Nutzer, insbesondere für die Schmiermittelpumpen 9' bereitgestellt wird. Das Druckfluid am Ausgang der Versorgungspumpe weist in dem hier beschriebenen Ausführungsbeispiel einen Druck von 50 bar auf. Bei derartigen Drücken kommt eine Sicherheitsvorschrift zur Anwendung, in welcher festgelegt wird, dass druckmittelführende Leitungen entweder doppelwandig oder mit einem Spritzschutz und einer Überwachung auszuführen sind, und zwar insbesondere dann, wenn sie sich in der Nähe einer Wärmequelle befinden. Insbesondere gilt das für Hubkolbenbrennkraftmaschinen, wobei dort insbesondere die Abgasseite Temperaturen aufweist, die zur Entzündung von Hydraulikölen führen kann. Die Versorgungspumpen, sowie Druckleitungen werden insbesondere bei Nachrüstung der Versorgungseinheit im Motorraum angebracht, wo aufgrund des begrenzten Platzangebots nicht auszuschliessen ist, dass zumindest die Druckleitungen 14' und der Verteilerblock 15' abgasseitig im Motorenraum angebracht werden müssen.

Daher kann auf die Sicherheitsmassnahmen insbesondere bei Nachrüstung von Versorgungseinheiten gerade im Motorraum nicht verzichtet werden.

Als nachteilig hat sich bei der vorbekannten Lösung herausgestellt, dass aufgrund des beschränkten Platzangebots die Druckleitungen zumeist schlecht zugänglich sind. Aus diesem Grund bereitet die (nachträgliche) Montage eines Spritzschutzes oder eines doppelwandigen Rohrs oftmals Schwierigkeiten. In dem vorhandenen Zwischenraum zwischen der Brennstoffversorgungseinheit 4' und/oder der Abgassammeleinheit 6' müssen somit die Versorgungspumpen 13', die zugehörigen Antriebsmotoren 30', der Verteilerblock 15' mit den zugehörigen Druckleitungen 14' sowie die Druckfluidleitungen 11' zu jedem der Verbraucher untergebracht werden und sollten zur Inspektion und Wartung auch nach der Montage möglichst einfach zugänglich bleiben. Im Verteilerblock 15' erfolgt die Zusammenführung der Druckströme, sowie eine Druckmessung. Des weiteren enthält der Verteilerblock ein Sicherheitsventil, mittels welchem Druckfluid bei Überlastung in das Druckfluidreservoir 12' rückführbar ist, indem ein Bypasskanal geöffnet wird. Je nach Länge der Druckleitung 14' ergibt sich somit ein unterschiedlicher Druckverlust von der Versorgungspumpe zum Verteilerblock. Um diesen Druckverlust zu überwachen, sowie eine Überwachung von Leckagen sicherzustellen, die durch Undichtigkeiten von Dichtstellen, aber auch durch Versagen von Bauteilen der Versorgungspumpe, der Druckleitungen oder des Verteilerblocks hervorgerufen werden können, ist jede der aus dem Stand der Technik bekannten Versorgungspumpen ebenfalls standardmässig mit einer Überdrucksicherung ausgerüstet, wozu ein Sicherheitsventil im Druckleitungsanschluss der Versorgungspumpe, sowie eine Rückflussmöglichkeit in das Druckfluidreservoir 12' vorgesehen sind.

Ein weiterer Nachteil des in Fig. 1 dargestellten Ausführungsbeispiels besteht darin, dass für Leckagen, die an der Versorgungspumpe 13' sowie im Bereich der Druckleitung 14', sowie im Verteilerblock 15' auftreten, je eine eigene Leckagesicherung vorgesehen werden muss. Insbesondere müssen unter Umständen für jedes der Bauteile eigene Leckagesicherungssysteme mit einem Ablauf in das Druckfluidreservoir 12' vorgesehen werden, was nicht nur zusätzliche Fluidleitungen, sondern auch zusätzliche Steuerungselemente erfordert, wie beispielsweise Sensoren, die eine Leckage detektieren und an eine Steuereinheit melden. Diese zusätzlichen Steuerungselemente sowie die Signalverarbeitung zur Auslösung eines Alarms und zur Zuordnung der Leckagen zum entsprechenden Bauteil müssen insbesondere bei Nachrüstung von Grossdieselmotoren mit einem Zylinderschmiersystem in eine bereits bestehende Steuerungseinheit integriert werden. Somit ist mit der Nachrüstung einer Versorgungseinheit nach Fig. 1 ein relativ hoher apparativer und steuerungstechnischer Aufwand verbunden.

Die Aufgabe der Erfindung ist es daher, eine Versorgungseinheit bereitzustellen, die derart ausgestaltet ist, dass auf einfache Weise die Verbindung von Versorgungspumpe und Verteilerblock erfolgt, sodass auf einen Spritzschutz oder den Einsatz eines doppelwandigen Rohrs verzichtet werden kann.

Eine weitere Aufgabe der Erfindung besteht darin, den Platzbedarf für die Versorgungseinheit zu reduzieren.

Eine weitere Aufgabe der Erfindung besteht darin, eine Leckagesicherung für die Versorgungseinheit vorzusehen, die eine einfache Anbindung an bestehende Leckagesicherungen erlaubt und mit geringem Aufwand mit zugehörigen Steuerungselementen in bestehende Schmiermittelversorgungssysteme integrierbar ist.

Eine weitere Aufgabe der Erfindung besteht darin, die Anzahl der Schnittstellen, zwischen denen Druckfluid übertragen werden muss, Druckfluidreservoir bis zum Verbraucher zu reduzieren.

Eine weitere Aufgabe der Erfindung besteht darin, die Leckagesicherung derart zu gestalten, dass auch beim Auftreten einer Leckage der Betrieb der Versorgungseinheit, sowie de Schmiersystems aufrechterhalten werden kann.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Eine Versorgungseinheit umfasst eine Versorgungspumpe sowie einen Verteilerblock für ein Druckfluid, eine Zufuhrleitung zur Zuführung von Druckfluid zur Versorgungspumpe sowie eine Druckfluidleitung zur Zuführung von Druckfluid zu einem Verbraucher, wobei die Versorgungspumpe zur Förderung des Druckfluids zum Verteilerblock dient, wobei der Verteilerblock zumindest einen Verteilerkanal enthält, durch welchen Druckfluid von der Versorgungspumpe über die Druckfluidleitung zum Verbraucher pumpbar ist, und die Versorgungspumpe unmittelbar an den Verteilerblock ankoppelbar ist.

Nach einer vorteilhaften Ausführungsform enthält der Verteilerblock einen Kanal für einen Leckagestrom, der mit einem entsprechenden Kanal der Versorgungspumpe verbindbar ist.

Nach einem vorteilhaften Ausführungsbeispiel enthält der Verteilerblock zumindest einen Kanal für einen Leckagestrom, der mit einem Zwischenraum zwischen einem die Druckfluidleitung umgebenden Mantelrohr und Druckfluidleitung verbindbar ist. Der Leckagestrom wird somit einerseits vollständig getrennt vom Druckfluidstrom geführt, andererseits ist gewährleistet, dass kein Leckagefluid in den Motorraum der Hubkolbenbrennkraftmaschine austreten kann.

Nach einem weiteren vorteilhaften Ausführungsbeispiel enthält der Verteilerblock sowohl einen Kanal für einen Leckagestrom, der mit einem entsprechenden Kanal der Versorgungspumpe verbindbar ist, als auch zumindest einen Kanal für einen Leckagestrom, der mit einem Zwischenraum zwischen einem die Druckfluidleitung umgebenden Mantelrohr und Druckfluidleitung verbindbar ist.

Zur Detektierung von Leckagefluid kann ein gemeinsames Detektierungselement für den Leckagestrom vorgesehen sein, wobei als Detektierungselement insbesondere ein Leckagefluidsensor oder ein Niveausensor vorsehbar ist. Mit diesem Detektierungselement können alle möglicherweise an der Versorgungseinheit auftretenden Leckagen zentral überwacht werden. Zudem ist gewährleistet, dass der Betrieb der Verbraucher, also insbesondere der Schmiermittelpumpe trotz Leckage weiter aufrechterhalten werden kann. Zusätzlich kann ein Drucksensor in den Leckagekanälen vorgesehen sein, sodass gewährleistet ist, dass auch in den Leckagekanälen der Betriebsdruck zumindest annähernd aufrechterhalten wird. Dadurch wird der Betrieb der Verbraucher, insbesondere der Schmiermittelpumpe auch gewährleistet, wenn eine Leckage detektiert worden ist. Zudem ist es möglich, auch verbraucherseitige Leckagen über das Mantelrohr der Druckfluidleitung zu überwachen, sodass eine verbraucherseitige Leckageüberwachung entfallen kann.

Zumindest zwei Pumpen sind mit dem Verteilerblock unmittelbar verbindbar, sodass die Betriebssicherheit der Versorgungseinheit erhöht werden kann und jederzeit eine Wartung der Versorgungspumpen erfolgen kann, ohne dass der Betrieb der Versorgungseinheit unterbrochen werden müsste.

Jede der Versorgungspumpen weist eine Drehachse auf, um welche ein Rotorelement der Versorgungspumpe drehbar gelagert ist, wobei die Versorgungspumpen derart zueinander angeordnet sind, dass die Drehachsen parallel zueinander verlaufen und/oder spiegelbildlich und/oder in einem Winkel zueinander angeordnet sind. Ein Vorteil der beschriebenen Anordnungen ist insbesondere, dass die Versorgungspumpen sowie der Verteilerblock auf einer gemeinsamen Grundplatte angeordnet werden können.

Nach einer weiteren vorteilhaften Ausgestaltung umfasst die Zufuhrleitung ein Verteilerelement, durch welches Druckfluid jeder der Versorgungspumpen zuführbar ist, wobei ein Umlenkelement in der Zufuhrleitung vorgesehen ist, wodurch die Zufuhr von Druckfluid zu jeder der Versorgungspumpen steuerbar ist und/oder zumindest die Zufuhr von Druckfluid zu zumindest einer der Versorgungspumpen unterbrechbar ist. Das Umlenkelement umfasst insbesondere einen Kugelhahn.

Nach einer vorteilhaften Ausführungsform ist stromaufwärts des Umlenkelements ein einen Druckverlust erzeugendes Mittel, insbesondere ein Drosselventil vorgesehen. Dieses Drosselventil dient einer Reduktion des Drucks des Druckfluids, welches vom Druckfluidreservoir zugeführt ist. Somit ist gewährleistet, dass der zulässige Eintrittsdruck am saugseitigen Anschluss der Versorgungspumpe nicht überschritten wird, somit eine Schädigung der Versorgungspumpe durch zu hohen Eintrittsdruck ausgeschlossen ist.

Nach einer vorteilhaften Ausführungsform ist das Umlenkelement und/oder das Drosselventil als Teil des Verteilerblocks ausgebildet.

Nach einer weiteren vorteilhaften Ausführungsform ist eine Dichtung zwischen Verteilerblock und Druckfluidleitung vorsehbar, die druckdicht ausgestaltet ist, sodass auch nach Auftreten einer Leckage der Betrieb der Schmiermittelpumpe aufrechterhaltbar ist. Alternativ dazu oder in Ergänzung zu der Dichtung zwischen Verteilerblock und Druckfluidleitung umfasst das Mantelrohr für die Druckfluidleitung Verstärkungsmittel, sodass es mit dem Betriebsdruck des Druckfluids in der Druckfluidleitung beaufschlagbar ist. Ein derartiges Verstärkungsmittel umfasst insbesondere ein druckbeständiges Mantelrohr, dessen Wandstärke derart ausgewählt ist, dass das Mantelrohr gegenüber dem höchstzulässigen Betriebsdruck zumindest über einen Zeitraum von einigen Betriebsstunden beständig ist. Als weiteres derartiges Verstärkungsmittel können Werkstoffe guter Druckfestigkeit für das Mantelrohr gewählt werden.

Die Versorgungspumpe umfasst einen druckseitigen Anschluss, der unmittelbar an den Verteilerblock ankoppelbar ist, wobei zwischen druckseitigem Anschluss und Verteilerblock zumindest ein Dichtungselement angeordnet ist. Das Dichtungselement umfasst einen inneren Dichtungsring und einen äusseren Dichtungsring. Zwischen den Dichtungselementen ist ein Kanal zur Aufnahme von Leckagefluid vorgesehen.

Der Kanal als ist insbesondere als Ringkanal ausgebildet, der in fluidleitender Verbindung mit dem pumpenseitigen Leckagefluidkanal steht.

Das Druckfluid umfasst ein Hydrauliköl, wobei aufgrund der vorliegenden Anordnung der Einsatz von brennbaren Hydraulikölen zulässig ist. Mittels der erfindungsgemässen Versorgungseinheit kann der Austritt von Hydrauliköl durch Leckage ausgeschlossen werden, da Leckagefluid durch das Vorsehen eines Leckagefluidzirkulationssystems nicht in die Umgebung, das heisst insbesondere in den Motorraum einer Hubkolbenbrennkraftmaschine austreten kann.

Die Versorgungseinheit ist derart ausgestaltet, dass in einem der Verteilerkanäle des Verteilerblocks ein Druckbegrenzungsventil und/oder ein Sicherheitsventil angeordnet sind. Das Druckbegrenzungsventil ist auf einen Druck einstellbar, der unter dem normalen Betriebsdruck liegt, sodass bei dem Ausfall eines Bauelements der Betrieb der Schmiermittelpumpe mit verminderter Schmiermittelabgabe aufrecht erhaltbar ist, sodass eine Notschmierung gewährleistbar ist.

Eine erfindungsgemässe Versorgungseinheit findet insbesondere in einer Hubkolbenbrennkraftmaschine Verwendung, wobei die Hubkolbenbrennkraftmaschine eine Versorgungseinheit nach einem der vorhergehenden Ausführungsformen umfasst. Die Hubkolbenbrennkraftmaschine umfasst eine Mehrzahl von ölgeschmierten Zylindern, wobei jeder der Zylinder einen Zylinderinnenraum umfasst, der von einer Zylinderwand begrenzt ist, wobei das Schmiermittel mittels einer Schmiermittelpumpe über Bohrungen an der Zylinderwand und/oder Bohrungen, insbesondere Düsen, auf der Kolbenoberfläche in den Zylinderinnenraum zwischen Zylinderwand und Kolben förderbar ist, die Schmiermittelpumpe einen Hubkolben umfasst, der derart steuerbar ist, dass Schmiermittel portionsweise in die zur Zylinderwand und/oder zum Kolben der Hubkolbenbrennkraftmaschine führende Schmiermittelleitung dosierbar ist, sodass pro Kolbenhub des Hubkolbens der Schmiermittelpumpe eine definierte Menge Schmiermittel zu den Bohrungen und/oder Düsen an der Zylinderwand und/oder Kolbenoberfläche in den Zylinderinnenraum gelangt, wobei der Hubkolben mit dem aus der Versorgungseinheit bereitgestellten Druckfluid beaufschlagbar ist.

Nach einem vorteilhaften Ausführungsbeispiel ist beim Förderhub des Hubkolbens der Schmiermittelpumpe eine erste Kolbenfläche mit Druckfluid beaufschlagbar, wobei insbesondere zur Rückstellung des Hubkolbens eine zweite, der ersten Kolbenfläche gegenüberliegende Kolbenfläche des Hubkolbens mit Druckfluid beaufschlagbar ist. Nach einem anderen, nicht im Detail dargestellten Ausführungsbeispiel ist der Hubkolben nur einseitig mit Druckfluid beaufschlagbar, die Rückstellung erfolgt mittels eines mechanischen Rückstellmechanismus, wie beispielsweise einer Feder oder eines elektromagnetischen Rückstellmechanismus.

Es versteht sich von selbst, dass die Verwendung des erfindungsgemässen Verteilerblocks eine erhebliche Vereinfachung darstellt, den Wartungsaufwand reduziert und natürlich weitaus kostengünstiger ist als die Verwendung einer zusätzlichen Rohrverbindung zum Verteilerblock, die aufgrund eines Betriebsdrucks im Bereich von bis zu 50 bar besonderen Klassenvorschriften genügen muss. In diesen Klassenvorschriften, die der Betriebssicherheit der unter Druck stehenden Anlagenteile dient, ist vorgeschrieben, dass eine Fluidleitung bei einem Betriebsdruck von derzeit mehr als 16 bar doppelwandig ausgeführt sein muss oder mit einem Spritzschutz versehen sein muss.

Ein weiterer Vorteil der erfindungsgemässen Versorgungseinheit liegt darin begründet, dass die Versorgungseinheit auch bei reduziertem Platzangebot nachrüstbar ist, insbesondere bereits im Betrieb befindliche Hubkolbenbrennkraftmaschinen nachträglich mit einer derartigen Versorgungseinheit versehen werden können, wobei insbesondere weniger zusätzliche Steuerungsmittel erforderlich sind, sodass die Anbindung der Versorgungseinheit an bestehende Steuerungen ohne oder nur mit geringen Modifikationen derselben in einfacher Weise erfolgen kann.
- Fig. 1: eine bekannte Versorgungseinheit für eine Hubkolbenbrennkraftmaschine;
- Fig. 2: ein Ausführungsbeispiel einer erfindungsgemässen Versorgungseinheit;
- Fig. 3: eine Darstellung des Hydraulikschemas;
- Fig. 4: eine erste Ansicht eines Ausführungsbeispiels eines erfindungsgemässen Verteilerblocks;
- Fig. 5: eine zweite Ansicht des Ausführungsbeispiels gemäss Fig. 4;
- Fig. 6: eine erste Ansicht eines Details des erfindungsgemässen Verteilerblocks;
- Fig. 7: ein Schnitt durch das Detail von Fig. 6.

Zur Unterscheidung des Stands der Technik von den Ausführungsbeispielen der vorliegenden Erfindung, sind, wie bereits erwähnt, diejenigen Merkmale, die sich auf eine bekannte Versorgungseinheit beziehen, mit einem Hochkomma versehen, während die Merkmale von erfindungsgemässen Vorrichtungen kein Hochkomma tragen.

Die Fig. 1 zeigt in einer schematischen Darstellung ein Ausführungsbeispiel einer Versorgungseinheit, wie sie aus dem Stand der Technik bekannt ist. Da dieses Beispiel bereits eingangs ausführlich diskutiert wurde, erübrigt sich hier eine weitere Beschreibung der Fig. 1.

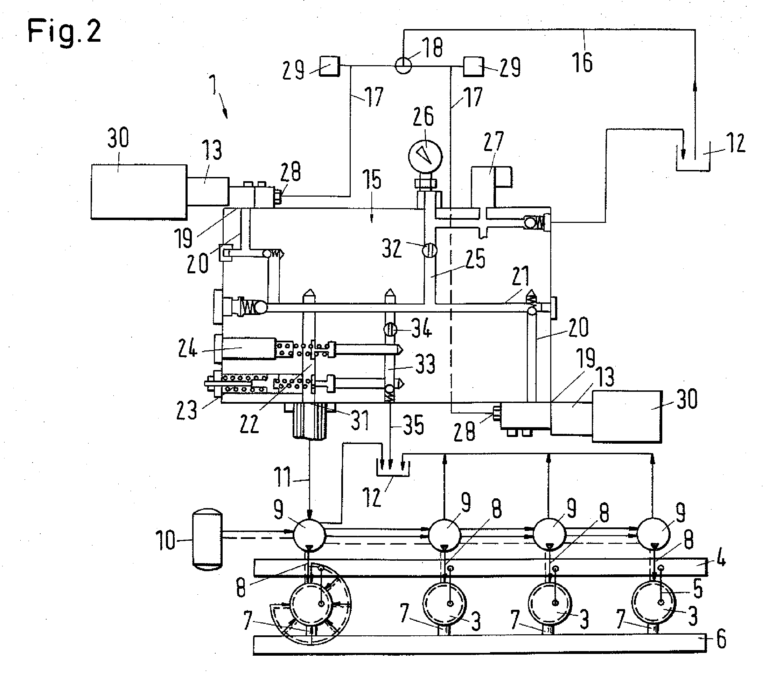

In Fig. 2 ist eine Versorgungseinheit 1 für zumindest eine Schmiermittelpumpe 9, insbesondere eine Hubtaktschmierpumpe zur Zylinderschmierung eines Zylinders 3 einer Hubkolbenbrennkraftmaschine, insbesondere eines bekannten Grossdieselmotors 2 schematisch dargestellt, der hier mit 4 Zylindern, aber z.B. bis zu 12, 13 oder 14 Zylinder, oder sogar mehr haben kann, und dessen Gehäuse in an sich bekannter Weise einen nicht dargestellten Ständer und ein Kurbelgehäuse umfasst, in welchem Kurbelgehäuse die Kurbelwelle gelagert ist. Vier derartige Zylinder 3 sind in einer stark vereinfachten schematischen Ansicht von oben dargestellt. Eine Brennstoffversorgungseinheit 4, sowie eine Abgassammeleinheit 6 können in gleicher Weise wie in Fig. 1 dargestellt wurde, angeordnet sein. Von der Brennstoffversorgungseinheit 4 führt zumindest je eine Brennstoffversorgungsleitung 5 zu dem Zylinder 3. Vom Zylinder 3 führen des weiteren Abgasleitungen 7 zur Abgassammeleinheit 6. Zu jedem der Zylinder 3 führt weiters zumindest eine Schmiermittel enthaltende Leitung 8. Dieses Schmiermittel wird für die Schmierung der Zylinderinnenwand verwendet, um zu gewährleisten, dass der Kolben an der Zylinderinnenwand hin- und hergleiten kann, ohne dass es zur Schädigung der Zylinderinnenwand und/oder des Kolbens durch Mangelschmierung kommt. Alternativ dazu kann das Schmiermittel auch dem Kolben zugeführt werden. Am Umfang des Kolbens sind dazu zumeist mehrere Schmiermitteldüsen angeordnet, durch welche Schmiermittel in den Zwischenraum zwischen Kolben und Zylinderinnenwand gelangt. Der sich zwischen Zylinderinnenwand und Kolben ausbildende Schmierfilm benetzt insbesondere auch optional eingebaute Kolbenringe. Durch den Eintrag von Schmiermittel an mehreren Stellen am Kolbenumfang und/oder an der Zylinderinnenwand kann eine sehr gleichmässige Schmierung bei minimalem Schmiermittelverbrauch erzielt werden. Das Schmiermittel wird über je eine, einem Zylinder zugeordnete Schmiermittelpumpe 9 bereitgestellt. Diese Schmiermittelpumpe fördert je nach Bedarf Schmiermittel von einem Schmiermittelreservoir 10 über die Schmiermittelleitung 8 in den Zylinderinnenraum. Die Schmiermittelpumpe 9 ist insbesondere als Kolbenpumpe ausgestaltet, deren Kolben von einem Druckfluid antreibbar ist. Die Schmiermittelpumpe 9 kann auch mehrere Anschlüsse für Schmiermittelleitungen 8 aufweisen, wie an einem Zylinder 3 in Fig. 2 dargestellt ist. In diesem besonderen Fall wird dem Zylinder 3 an acht an dessem Umfang vorgesehenen Stellen Schmiermittel zugeführt. Die Anzahl der Schmiermitteleinspritzpunkte ist von der Schmiermittelmenge abhängig, sowie vom Zylinderdurchmesser. Da insbesondere bei Grossdieselmotoren Zylinderinnendurchmesser von ungefähr einem Meter durchaus üblich sind, ergibt sich die Notwendigkeit einer Vielzahl von an der Zylinderinnenwand und/oder der Kolbenwand verteilten Schmiermitteleinspritzpunkten. Das Druckfluid wird der Schmiermittelpumpe über die Druckfluidleitung 11 nach einer ersten Variante beim Dosierhub und beim Rückstellhub zugeführt, wobei in Fig. 2 nur je eine Druckfluidleitung dargestellt ist. Das Druckfluid wird nach Gebrauch über eine nicht dargestellte Leitung in das Druckfluidreservoir 12 zurückgeführt, von wo es nach einem eventuell erforderlichen Reinigungsschritt zur Entfernung von Abrieb und dergleichen wieder in den Druckfluidkreislauf gelangen kann. Alternativ dazu ist nach einem anderen, ebenfalls nicht im Detail dargestellten Ausführungsbeispiel der Hubkolben nur einseitig mit Druckfluid beaufschlagbar, die Rückstellung desselben erfolgt mittels eines mechanischen Rückstellmechanismus, wie beispielsweise einer Feder oder eines elektromagnetischen Rückstellmechanismus. Alternativ dazu kann der Hub des Hubkolbens durch ein elektromagnetisch betätigbares Stellglied am Hubkolben erfolgen. Ein Vorteil eines derartigen elektromagnetisch betätigbaren Stellglieds ist die präzise Steuerbarkeit der Dauer des Kolbenhubs, sodass die Einspeisegeschwindigkeit des Schmiermittels in den Zylinderinnenraum steuerbar ist. Hierdurch wird insbesondere erreicht, dass ein langsamer und gleichmässiger Eintrag von Schmiermittel in den Zylinderraum erfolgt und das Schmiermittel sich an der Zylinderinnenwand verteilt. Hiermit kann vermieden werden, dass Schmiermittel durch den Einspritzdruck und die Einspritzgeschwindigkeit in den Kolbenraum gelangt und eventuell sich auf der brennstoffseitigen Kolbenoberfläche absetzt. Für die Rückstellung eines derartigen elektromagnetisch betätigbaren Stellgliedes kann wiederum Druckfluid zum Einsatz kommen. Das Druckfluid wird zum Betrieb der Schmiermittelpumpe 9 nach diesem Ausführungsbeispiel auf einen Druck von ungefähr 50 bar gebracht werden, wozu eine Komprimierung des unter einem niedrigeren Druck stehenden Druckfluids, der insbesondere im Bereich von ca. 4 bis 8 bar liegt, erforderlich ist.

Alternativ dazu kann eine langsame Schmierung des Zylinderraums auch generell erhalten werden, indem der Druck des Druckfluids auf einen Wert um ca. 20 bar gesenkt wird. Hierzu wird entweder zumindest eine Versorgungspumpe verwendet, deren Ausgangsdruck in diesem Bereich liegt oder alternativ dazu in einen druckfluidführenden Kanal der früher beschriebenen Versorgungseinheit oder in die Druckfluidleitung 11 selbst ein weiteres druckverlusterzeugendes Mittel, insbesondere ein Drosselventil, eingebaut.

Zur Komprimierung des Druckfluids wird eine Versorgungspumpe 13, vorzugsweise eine Schraubenpumpe oder eine Zahnradpumpe verwendet, wobei in Fig. 2 zwei gleichartige Pumpen gezeigt sind, wobei die zweite Pumpe aus Redundanzgründen vorgesehen ist. Die Versorgungspumpe saugt Druckfluid, insbesondere ein Hydrauliköl, aus dem Druckfluidreservoir 12 an, wobei das Druckfluid in einer Zufuhrleitung 16 über ein Umlenkelement 18, das bei Verwendung von zwei Versorgungspumpen einen Dreiwegehahn umfasst, der insbesondere als Kugelhahn ausgestaltet ist, über eine Verteilerleitung 17 oder Verteilerkanal zumindest einer der beiden Versorgungspumpen zuführbar ist. Die Verteilerleitung ist als Rohr ausgebildet, welches an den saugseitigen Anschluss 28 der Versorgungspumpe anschliessbar ist oder in einer nicht dargestellten Variante als Teil des Verteilerblocks 15 ausgebildet sein kann. Das Umlenkelement 18 ist dann gegebenenfalls ebenfalls im Verteilerblock 15 integriert. Stromaufwärts des Umlenkelements 18 kann des weiteren ein druckverlusterzeugendes Mittel, insbesondere ein Drosselventil 48, vorgesehen sein, sodass gewährleistet werden kann, dass Druckfluid mit dem für die Versorgungspumpe geeigneten Eintrittsdruck verfügbar ist, der insbesondere 4 bis 8 bar beträgt. Steht das Druckfluidreservoir 12 unter höherem Druck, kann es erforderlich sein, diesen Druck über das Drosselventil 48 zu verringern. Das Drosselventil ist ein Mittel zur Erzeugung von Druckverlust und ist in diesem Ausführungsbeispiel stellvertretend für andere Mittel zur Erzeugung eines Druckverlusts genannt, was somit keineswegs als Beschränkung auf ein bestimmtes druckverlusterzeugendes Mittel anzusehen ist. Zwischen Umlenkelement 18 und saugseitigem Anschluss 28 der Versorgungspumpe oder zwischen Drosselventil 48 und Umlenkelement 18 oder an einer anderen Stelle zwischen dem Druckfluidreservoir 12 und der Versorgungspumpe 13 kann zumindest ein Druckschalter 29 angeordnet sein. Der Druckschalter wird betätigt, wenn die Verbraucher, das heisst, die Schmiermittelpumpen kein Schmiermittel fördern sollen. Insbesondere wenn die Hubkolbenbrennkraftmaschine für einen längeren Zeitraum abgestellt wird, kann durch Betätigung des Druckschalters die Zufuhr von Druckfluid zu den Versorgungspumpen 13 unterbrochen werden. Die Betätigung des Druckschalters wiederum kann automatisch ausgelöst werden, wenn ein anderer Motorparameter, insbesondere z.B. die Lagerschmierung abgestellt wird. Alternativ oder in Ergänzung zu einem Druckschalter 29 kann auch ein nicht dargestellter Drucksensor vorgesehen sein, wodurch eine Überwachung des Zulaufdrucks zum saugseitigen Anschluss der Versorgungspumpe ermöglicht wird. Somit kann ausgeschlossen werden, dass Druckfluid mit zu niedrigem Eintrittsdruck oder Gasblasen in die Versorgungspumpe gelangt, wofür ansonsten eine eigene, von der Versorgungspumpe zum Druckfluidreservoir 12 führende Rücklaufleitung erforderlich wäre. Nach der Komprimierung des Druckfluids in der Versorgungspumpe 13 gelangt das Druckfluid in einen Verteilerblock 15, in welchem Druckfluid für die verschiedensten Verbraucher, insbesondere für die Schmiermittelpumpen 9 bereitgestellt wird. Das Druckfluid am Ausgang der Versorgungspumpe weist in dem dargestellten Ausführungsbeispiel einen Druck von 50 bar auf. Auf die Druckleitungen 14' kann in dem in Fig. 2 gezeigten Ausführungsbeispiel gänzlich verzichtet werden, da der druckseitige Anschluss 19 unter Verzicht auf ein Rohrleitungsstück direkt an den Verteilerblock 15 angrenzt. Von jeder der Versorgungspumpen führt ein Druckkanal 20 in eine im Verteilerblock 15 angeordnete Sammelleitung 21, von welcher ein in die Druckleitung 11 mündender von Druckfluid durchströmter Kanal 22 abzweigt. Im Kanal 22 sind ein Druckbegrenzungsventil 23 und ein Sicherheitsventil 24 angeordnet. Das Sicherheitsventil 24 ist in diesem Ausführungsbeispiel auf einen Auslösedruck, der um ca. 20% über dem Betriebsdruck des Druckfluids liegt, eingestellt, sodass bei Überschreiten dieses Auslösedrucks ein Druckfluidkanal in Richtung Druckfluidreservoir 12 geöffnet wird, wodurch es schnell zum Druckabbau kommt, sodass die Verbraucher nicht mit einem Druck, der über dem höchstzulässigen Betriebsdruck liegt, beaufschlagt werden können. Durch das Druckbegrenzungsventil 23 ist der gewünschte Betriebsdruck einstellbar. Im dargestellten Ausführungsbeispiel soll der einstellbare Bereich insbesondere zwischen 15 und 50 bar betragen. Durch Manipulation des Druckbegrenzungsventils 23, ist es möglich, eine Notschmierung aufrecht zu erhalten, indem der Betriebsdruck gesenkt wird. Durch Senkung des Betriebsdrucks erhöht sich die Zeitspanne für den Hub des Hubkolbens der Schmiermittelpumpe 9, sodass der Eintrag von Schmiermittel über Düsen im Zylinder und/oder im Kolben auf die Zylinderinnenwand verlangsamt wird. Eine derartige Notschmierung kann ausreichende Schmierung der Zylinderinnenwand der Hubkolbenbrennkraftmaschine gewährleisten, wenn es zum Ausfall von Beuelementen oder Baugruppen kommt, wobei der Ausfall nicht allein die Versorgungseinheit zu betreffen hat, sondern auch andere Ausfälle umfassen kann, die eine veränderte Betriebsweise der Hubkolbenbrennkraftmaschine erforderlich machen. Ein wesentlicher Vorteil der in Fig. 2 dargestellten Anordnung wird durch die Ausgestaltung des Verteilerblocks deutlich, in welchem somit Druckbegrenzungsventil 23 und Sicherheitsventil 24 enthalten sind, sodass die Notwendigkeit, je ein Druckbegrenzungsventil 23 und ein Sicherheitsventil 24 pro Versorgungspumpe vorzusehen, entfällt. In vielen im Handel angebotenen Pumpen, die sich zur Förderung von Druckfluiden eignen, ist nämlich aufgrund des standardmässigen Anschlusses einer Druckleitung, wie in Fig. 1 gezeigt wurde, an der Pumpe selbst ein Druckbegrenzungsventil und/oder ein Sicherheitsventil vorgesehen. In diesem Fall ist aber eine zusätzliche Entlastungsleitung zu einem Druckfluidreservoir vorzusehen, was wiederum zusätzlichen Montageaufwand bedeutet. Auf ein Druckbegrenzungsventil und/oder ein Sicherheitsventil, das somit in der Versorgungspumpe angeordnet ist, insbesondere in einem Druckfluidkanal, der zum druckseitigen Anschluss 19 führt, kann somit in der erfindungsgemässen Lösung gänzlich verzichtet werden. Somit ist nur ein Druckbegrenzungsventil 23 und nur ein Sicherheitsventil 24 zentral im Verteilerblock 15 vorzusehen, wodurch sich nicht nur der Aufbau der Versorgungspumpe vereinfacht, sondern auch die Anzahl der Leitungen, insbesondere der druckbeaufschlagten Druckfluidleitungen verringert wird und letztendlich die Steuerung vereinfacht wird, da allein mittels des Druckbegrenzungsventils gewährleistet werden kann, dass jedem der Verbraucher Druckfluid gleichen Betriebsdrucks zugeführt wird. Der Betriebsdruck des Druckfluids kann auch im Verteilerblock zentral überwacht werden. Dazu ist in einem Seitenkanal 25 der Sammelleitung 21 ein Druckanzeigegerät 26 für örtliche Überwachung, sowie ein Drucksensor 27 zur Übermittlung des Wertes für den Betriebsdruck an eine in Fig. 2 nicht gezeigte zentrale Steuerungseinheit vorgesehen.

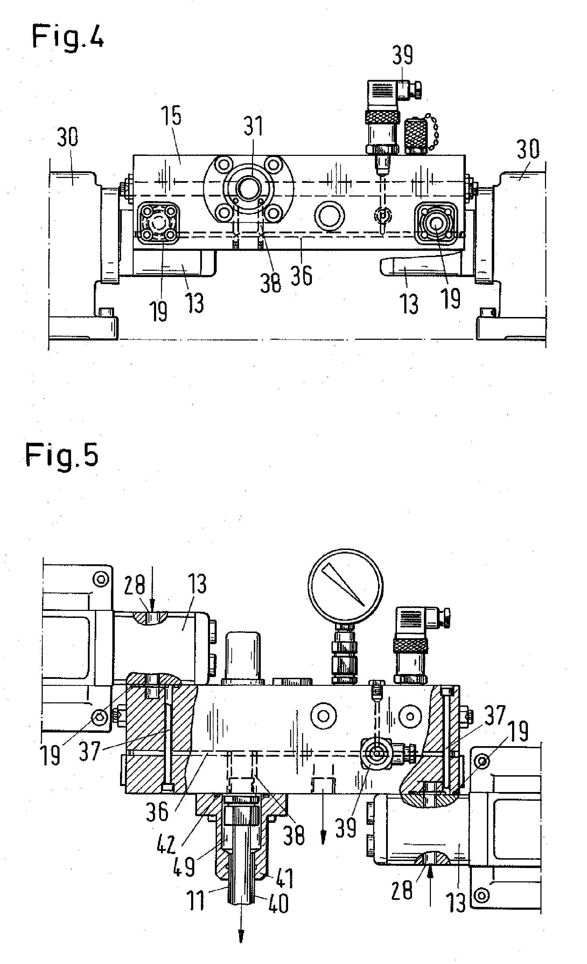

Ein weiterer Vorteil der Anordnung der Versorgungspumpe oder einer Mehrzahl von Versorgungspumpen direkt an einem gemeinsamen Verteilerblock ist die vereinfachte Sammlung und Überwachung von Druckfluid aus Leckagen, die am besten in Fig. 4, 5, 6 und 7 dargestellt ist und auf die in der Folge noch genauer eingegangen werden soll. Als ein weiterer wesentlicher Vorteil der dargestellten Anordnung ist anzusehen, dass der Betrieb der Verbraucher, das heisst der Schmiermittelzufuhr zur Hubkolbenverbrennungskraftmaschine aufrecht erhalten werden kann, auch wenn eine Leckage vorliegt.

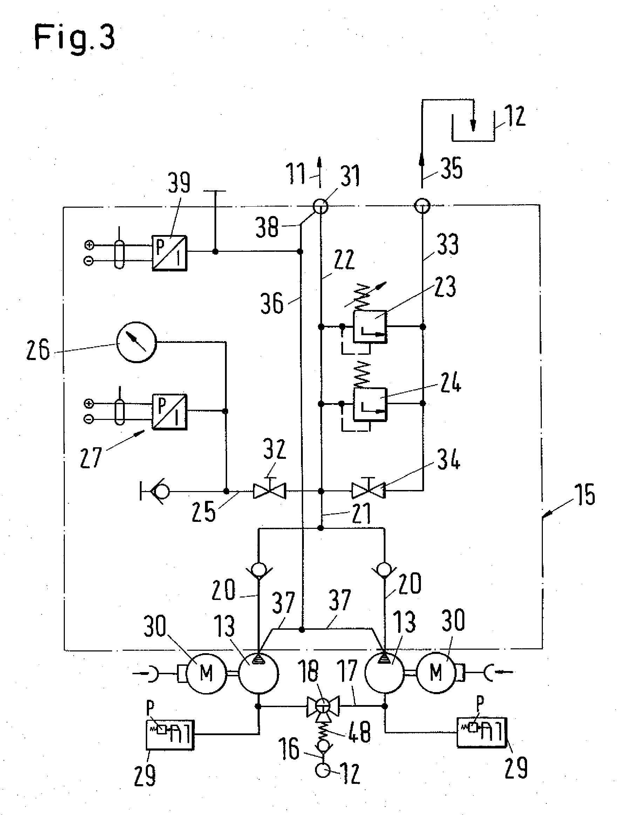

Fig. 3 zeigt ein hydraulisches Schaltbild einer Anordnung, wie sie in Fig. 2 gezeigt worden ist. Das Druckfluid wird Reservoir 12 entnommen und über die Zufuhrleitung 16 dem Umlenkelement 18 zugeführt. Je nach Stellung des Umlenkelements 18 wird eine der Versorgungspumpen 13, beide Versorgungspumpen oder keine Versorgungspumpe mit Druckfluid beaufschlagt. In dem Abschnitt der Zufuhrleitungen 16, der sich zwischen dem Umlenkelement 18 und der betreffenden Versorgungspumpe 13 befindet, befindet sich zumindest ein Druckschalter 29 oder ein Drucksensor, mittels welchem gewährleistet wird, dass die nachgeschaltete Versorgungspumpe nur betrieben wird, wenn der Eintrittsdruck im zulässigen Bereich liegt, das heisst insbesondere zwischen 4 und 8 bar. Jede der Versorgungspumpen 13 ist durch einen Elektromotor 30, insbesondere einen Drehstrommotor antreibbar. Von jeder der Versorgungspumpen gelangt Druckfluid über Druckkanäle 20 in eine Sammelleitung 21, von welcher ein Kanal 22 abzweigt, der Druckfluid zu der zu den Verbrauchern führenden Druckleitung 11 führt. Hierzu ist am Verteilerblock der Druckfluidanschluss 31 vorgesehen. Von der Sammelleitung 21 zweigt ein Seiten kanal 25 ab, der mit einem Absperrmittel 32 verschliessbar ist. Durch Seitenkanal 25 gelangt Druckfluid zu einem Druckanzeigegerät 26 sowie zu einem Drucksensor 27, wodurch der Betriebsdruck des Druckfluids örtlich und zentral überwachbar ist.

Von der Sammelleitung zweigt ein weiterer Kanal 33 ab, der mit einem Absperrmittel 34 verschliessbar ist. Absperrmittel 34 ist im Normalbetrieb geschlossen. In den Kanal 33 münden die Kanäle, in welchen das Druckbegrenzungsventil 23, sowie das Sicherheitsventil 24 angeordnet sind. Wird eines der beiden Ventile (23, 24) geöffnet, wird Druckfluid über den Kanal 33 in eine Entlastungsleitung 35 geleitet, die zum Druckfluidreservoir 12 führt. Somit kann Druckfluid, dessen Betriebsdruck über dem zulässigen Betriebsdruck für Druckfluidleitung 11 und Verbraucher liegt, sicher in das Druckfluidreservoir zurückgeleitet werden, ohne dass es zu Beschädigungen der Versorgungseinheit oder der Verbraucher kommt.

In Fig. 3 ist des weiteren gezeigt, dass mit der erfindungsgemässen Versorgungseinheit auch eine einfache Bündelung und Überwachung von Leckagefluid ermöglicht wird. Leckagen können grundsätzlich immer dann auftreten, wenn Druckfluid zwischen benachbarten Baueinheiten ausgetauscht werden muss, wie zum Beispiel zwischen Versorgungspumpe 13 und Verteilerblock 15, zwischen Verteilerblock 15 und Druckfluidleitung 11, oder zwischen Druckfluidleitung 11 und Verbraucher 9. Eine weitere mögliche Leckagequelle ergibt sich durch Defekte in der Druckfluidleitung 11. Je mehr derartiger Schnittstellen existieren, desto aufwändiger wird die Überwachung von Leckagen und die Abfuhr von Leckagefluid.

Durch die direkte Verbindung von Versorgungspumpe 13 mit dem Verteilerblock 15 unter Verzicht auf die Druckleitung 14' fällt je eine derartige Schnittstelle pro Versorgungspumpe weg. Zudem kann im Verteilerblock ein Leckagefluidsammelkanal 36 vorgesehen sein, in welchen pumpenseitige Leckagefluidkanäle 37 einmünden, sowie ein Kanal 38 einmündet, der Leckagefluid aufnimmt, welches von der Druckfluidleitung stammt. An den Leckagefluidsammelkanal ist ein Sensor für Leckagefluid 39 angeschlossen, mittels welchem überwacht werden kann, ob in einer der angeschlossenen Schnittstellen eine Leckage vorliegt.

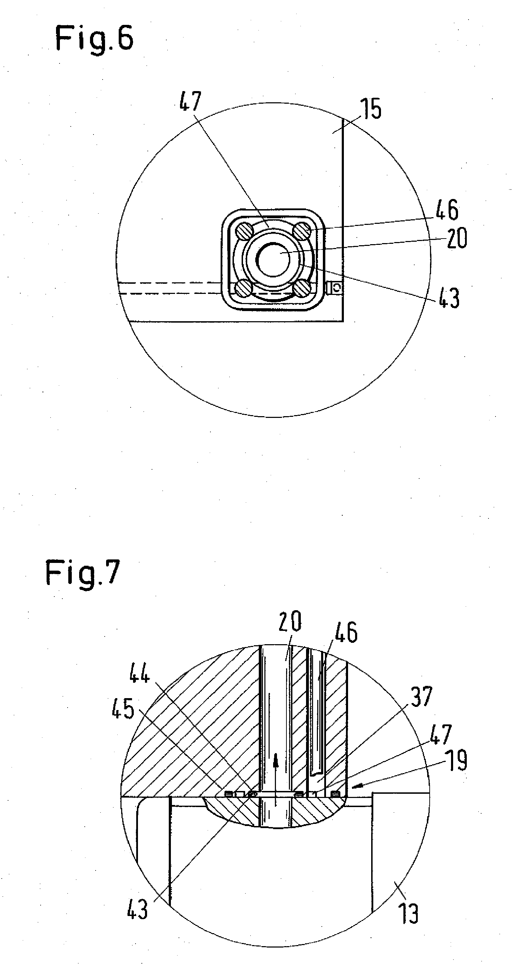

Fig. 4 zeigt in einer ersten Ansicht eines Ausführungsbeispiels eines erfindungsgemässen Verteilerblocks mögliche Schnittstellen, an welchen Leckagefluid auftreten kann. Zwei Versorgungspumpen 13 sind mit dem Verteilerblock 15 zu einer Versorgungseinheit 1 verbunden, wobei die Zufuhrleitungen zu den saugseitigen Anschlüssen 28 der Versorgungspumpen zur Erhöhung der Übersicht weggelassen worden sind. Auf die Ausgestaltung des druckseitigen Anschlusses 19 von Versorgungspumpe 13 soll insbesondere in Fig. 6 und Fig. 7 noch einmal im Detail eingegangen werden. Von jedem druckseitigen Anschluss 19 führt ein pumpenseitiger Leckagefluidkanal 37 (der nur in Fig. 5 sichtbar ist) zu einem Leckagefluidsammelkanal 36. In diesen Leckagefluidsammelkanal 36 münden auch die beiden Kanäle 38 für Leckagefluid von der Druckfluidleitung. Des weiteren zweigt ein Seitenkanal vom Kanal 36 ab, der zu einem Sensor 39 für Leckagefluid führt. Mit dem Sensor 39 für Leckagefluid kann Leckagefluid detektiert werden, sowie an eine zentrale Steuerungseinheit übermittelt werden, um beispielsweise einen Alarm auszulösen.

Fig. 5 zeigt eine zweite Ansicht des in Fig. 4 dargestellten Verteilerblocks. In dieser Ansicht ist insbesondere der Druckfluidanschluss 31 gut sichtbar. Die Druckfluidleitung 11 ist doppelwandig ausgeführt, sodass sie entlang ihrer gesamten Länge bis zum Verbraucher von einem Mantelrohr 40 gemäss Sicherheitsvorschrift ummantelt wird. Das Mantelrohr 40 wird von einem Anschlussstück 41 gehalten, welches über Schraubverbindungen mit dem Verteilerblock verbunden sein kann. Alternativ dazu wird das Mantelrohr 40 selbsttragend ausgeführt. Das Mantelrohr 40 stützt sich dann über nicht dargestellte Abstandhalter auf der Druckfluidleitung 11 ab. Zwischen Anschlussstück 41 und Verteilerblock ist eine umlaufende Dichtung 42 vorgesehen, sodass verhindert wird, dass Leckagefluid austreten kann. Im Zwischenraum 49 zwischen dem Mantelrohr 40 und der Druckfluidleitung 11 kann sich Leckagefluid sammeln, welches durch eine Leckage in der Druckfluidleitung 11 entstanden ist. Dieses Leckagefluid fliesst in die Kanäle 38 für Leckagefluid von der Druckfluidleitung und kann vom Sensor 39 für Leckagefluid erfasst werden. Da das Mantelrohr 40 druckbeständig, insbesondere druckbeständig für den Betriebsdruck in der Druckfluidleitung 11, ausgelegt ist, kann die Schmiermittelzufuhr zum Verbraucher, das heisst zur Hubkolbenbrennkraftmaschine, aufrecht erhalten werden, auch wenn eine Leckage vorliegt.

Die Fig. 6 zeigt den druckseitigen Anschluss 19 der Versorgungspumpe 13 im Detail. In Fig. 6 ist die Ansicht auf den Verteilerblock 15 gezeigt, wobei der pumpenseitige Anschluss zur Darstellung der Dichtungsverhältnisse weggelassen wurde. Zwischen Versorgungspumpe 13 und Verteilerblock 15 sind somit zwei ringförmige Dichtungen vorgesehen. Der innere Dichtungsring 43 umschliesst Druckkanal 20 und ist in einer in Fig. 7 gezeigten Ausnehmung 44 des Verteilerblocks gehalten. Die Versorgungspumpe 13 wird in diesem Ausführungsbeispiel von vier Schrauben 46 am Verteilerblock 15 gehalten. Zwischen innerem Dichtungsring 43 und äusserem Dichtungsring 45 befindet sich ein Ringkanal 47 zur Aufnahme von eventuell durch den inneren Dichtungsring austretendem Leckagefluid.

In Fig. 7 ist dargestellt, dass der Ringkanal 47 in den pumpenseitigen Leckagefluidkanal mündet. Des weiteren ist sichtbar, dass der äussere Dichtungsring 45 ebenfalls in einer Ausnehmung des Verteilerblocks geführt ist, sodass am pumpenseitigen Teil des druckseitigen Anschlusses 19 keine Modifikationen vorgenommen werden müssen. Dies hat den Vorteil, dass an der Versorgungspumpe zu Dichtungszwecken keine Modifikationen vorgenommen werden müssen, was den Zusammenbau von Versorgungspumpe und Verteilerblock erleichtert.

Der Ringkanal 47 mündet in den pumpenseitigen Leckagefluidkanal 37, der in der Bohrung für die Schraubverbindung 46 zwischen Versorgungspumpe und Verteilerblock verläuft. Diese Lösung erspart den Arbeitsschritt für eine weitere Bohrung, indem eine ohnehin notwendige Bohrung als Kanal für das Leckagefluid mitbenutzt werden kann.

### Bezugszeichenliste

1. Versorgungseinheit
2. Grossdieselmotor
3. Zylinder
4. Brennstoffversorgungseinheit
5. Brennstoffversorgungsleitung
6. Abgassammeleinheit
7. Abgasleitung
8. Schmiermittelleitung
9. Schmiermittelpumpe
10. Reservoir für Schmiermittel
11. Druckfluidleitung
12. Druckfluidreservoir
13. Versorgungspumpe
14. Druckleitung
15. Verteilerblock
16. Zufuhrleitung
17. Verteilerkanal
18. Umlenkelement
19.druckseitiger Anschluss
20. Druckkanal
21. Sammelleitung
22. Kanal
23. Druckbegrenzungsventil
24. Sicherheitsventil
25. Seitenkanal
26. Druckanzeigegerät
27. Drucksensor
28. saugseitiger Anschluss der Versorgungspumpe
29. Druckschalter
30. Elektromotor
31. Druckfluidanschluss
32. Absperrmittel
33. Kanal
34. Absperrmittel
35. Entlastungsleitung
36. Leckagefluidsammelkanal
37. pumpenseitiger Leckagefluidkanal
38. Kanal für Leckagefluid von der Druckfluidleitung
39. Sensor für Leckagefluid
40. Mantelrohr
41. Anschlussstück
42. Dichtung
43. innerer Dichtungsring
44.Ausnehmung
45. äusserer Dichtungsring
46. Schraube
47. Ringkanal
48. Drosselventil
49. Zwischenraum

## Patentansprüche

1. Versorgungseinheit, umfassend eine Versorgungspumpe (13) sowie einen Verteilerblock (15) für ein Druckfluid, eine Zufuhrleitung (16) zur Zuführung von Druckfluid zur Versorgungspumpe (13) sowie eine Druckfluidleitung (11) zur Zuführung von Druckfluid zu einem Verbraucher (9), wobei die Versorgungspumpe (13) zur Förderung des Druckfluids zum Verteilerblock (15) dient, wobei der Verteilerblock zumindest einen Verteilerkanal (17,20,21,22) enthält, durch welchen Druckfluid von der Versorgungspumpe über die Druckfluidleitung (11) zum Verbraucher (9) pumpbar ist, **dadurch gekennzeichnet, dass** die Versorgungspumpe (13) unmittelbar an den Verteilerblock (15) ankoppelbar ist.

2. Versorgungseinheit nach Anspruch 1, wobei der Verteilerblock (15) zumindest einen Kanal (36,37,38) für einen Leckagestrom enthält, der mit einem Zwischenraum (49) zwischen einem die Druckfluidleitung (11) umgebenden Mantelrohr (40) und Druckfluidleitung (11) und/oder mit einem entsprechenden Kanal der Versorgungspumpe verbindbar ist.

3. Versorgungseinheit nach Ansprüchen 1 oder 2, wobei ein gemeinsames Detektierungselement für den Leckagestrom vorgesehen ist, wobei als Detektierungselement insbesondere ein Leckagefluidsensor (39) oder ein Niveausensor vorsehbar ist.

4. Versorgungseinheit nach einem der vorhergehenden Ansprüche, wobei zumindest zwei Versorgungspumpen (13) mit dem Verteilerblock (15) unmittelbar verbindbar sind.

5. Versorgungseinheit nach Anspruch 4, wobei jede der Versorgungspumpen (13) eine Drehachse aufweist, um welche ein Rotorelement der Versorgungspumpe drehbar gelagert ist, wobei die Versorgungspumpen (13) derart zueinander angeordnet sind, dass die Drehachsen parallel zueinander verlaufen und/oder spiegelbildlich und/oder in einem Winkel zueinander angeordnet sind.

6. Versorgungseinheit nach einem der vorhergehenden Ansprüche, wobei ein Umlenkelement (18) in der Zufuhrleitung (16) vorgesehen ist, wodurch die Zufuhr von Druckfluid zu jeder der Versorgungspumpen (13) steuerbar und/oder zumindest die Zufuhr von Druckfluid zu zumindest einer der Versorgungspumpen (13) unterbrechbar ist, wobei das Umlenkelement (18) insbesondere als Kugelhahn ausgebildet ist.

7. Versorgungseinheit nach Anspruch 4, wobei stromaufwärts des Umlenkelements (18) ein einen Druckverlust erzeugendes Mittel, insbesondere ein Drosselventil (48), vorsehbar ist.

8. Versorgungseinheit nach Ansprüchen 4 oder 5, wobei das Umlenkelement (18) und/oder das Drosselventil (48) als Teil des Verteilerblocks (15) ausgebildet ist.

9. Versorgungseinheit nach einem der vorhergehenden Ansprüche, wobei eine Dichtung (42) zwischen Verteilerblock und Druckfluidleitung (11) vorsehbar ist, die druckdicht ausgestaltet ist, sodass auch noch nach Auftreten einer Leckage der Betrieb des Verbrauchers, insbesondere einer Schmiermittelpumpe (9), aufrechterhaltbar ist.

10. Versorgungseinheit nach Anspruch 9, wobei das Mantelrohr für die Druckfluidleitung (11) Verstärkungsmittel umfasst, sodass es mit dem Betriebsdruck des Druckfluids in der Druckfluidleitung (11) beaufschlagbar ist.

11. Versorgungseinheit nach einem der vorhergehenden Ansprüche, wobei die Versorgungspumpe einen druckseitigen Anschluss (19) umfasst, der unmittelbar an den Verteilerblock ankoppelbar ist, wobei zwischen druckseitigem Anschluss und Verteilerblock zumindest ein Dichtungselement (43,45) angeordnet ist.

12. Versorgungseinheit nach Anspruch 11, wobei das Dichtungselement einen inneren Dichtungsring (43) und einen äusseren Dichtungsring (45) umfasst, sowie zwischen den Dichtungselementen ein Kanal (47) zur Aufnahme von Leckagefluid vorgesehen ist.

13. Versorgungseinheit nach Anspruch 12, wobei der Kanal (47) als Ringkanal ausgebildet ist, der in fluidleitender Verbindung mit dem pumpenseitigen Leckagefluidkanal (37) steht.

14. Versorgungseinheit nach einem der vorhergehenden Ansprüche, wobei das Druckfluid ein Hydrauliköl umfasst.

15. Versorgungseinheit nach einem der vorhergehenden Ansprüche, wobei in einem der Verteilerkanäle (22,33) des Verteilerblocks (15) ein Druckbegrenzungsventil (23) und/oder ein Sicherheitsventil (24) angeordnet sind.

16. Versorgungseinheit nach Anspruch 15, wobei das Druckbegrenzungsventil (23) auf einen Druck einstellbar ist, der unter dem normalen Betriebsdruck liegt, sodass bei dem Ausfall eines Bauelements der Betrieb der Schmiermittelpumpe (9) mit verminderter Schmiermittelabgabe aufrecht erhaltbar ist, sodass eine Notschmierung gewährleistbar ist.

17. Hubkolbenbrennkraftmaschine umfassend eine Versorgungseinheit nach einem der vorhergehenden Ansprüche, wobei die Hubkolbenbrennkraftmaschine eine Mehrzahl von ölgeschmierten Zylindern (3) umfasst, wobei jeder der Zylinder einen Zylinderinnenraum umfasst, der von einer Zylinderwand begrenzt ist, wobei das Schmiermittel mittels einer Schmiermittelpumpe (9) über Bohrungen an der Zylinderwand und/oder Bohrungen, insbesondere Düsen, auf der Kolbenoberfläche in den Zylinderinnenraum zwischen Zylinderwand und Kolben förderbar ist, die Schmiermittelpumpe (9) einen Hubkolben umfasst, der derart steuerbar ist, dass Schmiermittel portionsweise in die zur Zylinderwand und/oder zum Kolben der Hubkolbenbrennkraftmaschine führende Schmiermittelleitung (8) dosierbar ist, sodass pro Kolbenhub des Hubkolbens der Schmiermittelpumpe (9) eine definierte Menge Schmiermittel zu den Bohrungen und/oder Düsen an der Zylinderwand und/oder Kolbenoberfläche in den Zylinderinnenraum gelangt, wobei der Hubkolben mit dem aus der Versorgungseinheit (1) bereitgestellten Druckfluid beaufschlagbar ist.

18. Hubkolbenbrennkraftmaschine nach Anspruch 17, wobei beim Förderhub des Hubkolbens eine erste Kolbenfläche mit Druckfluid beaufschlagbar ist, wobei insbesondere zur Rückstellung des Hubkolbens eine zweite, der ersten Kolbenfläche gegenüberliegende Kolbenfläche des Hubkolbens mit Druckfluid beaufschlagbar ist.
